# EUROPEAN PATENT APPLICATION

(11) **EP 4 768 761 A1**
(43) Date of publication of application: **01.07.2026**
(21) Application number: 25212627.1
(22) Date of filing: 31.10.2025
(51) Int. Cl.: F16K 11/074, F16K 31/122, F16K 31/528

(54) **A MECHANICAL SELECTOR VALVE**

(30) Priority: 30.12.2024 TR 2024212660
(71) Applicant: Arçelik Anonim Sirketi, 34445 Istanbul (TR)
(72) Inventor: OZERK, KAGAN, 34445 ISTANBUL (TR); POLAT, MURATHAN EREN, 34445 ISTANBUL (TR)

(57) **Abstract**

The present invention relates to a mechanical selector valve (1) comprising a valve body (1); at least one liquid inlet channel (111) which is arranged at an inlet end (11) of the valve body (1) and which is configured to be associated with at least one conventional valve (20) and/or at least one liquid connection line (30); a plurality of liquid outlet channels (121) which are arranged at an outlet end (12) of the valve body (1); a guiding shaft (2) which is provided in the valve body (1); a plurality of guiding housings (24) which extend between a first end (21) and a second end (22) of the guiding shaft (2), on a shaft outer wall (23) of the guiding shaft (2) facing the valve body (1); a movable ring washer (3) which is configured to move between a first position and a second position, in the direction of a pressure direction (X) from the first end (21) to the second end (22) so as to be centered on the guiding shaft (2), depending on the liquid pressure value accumulated in the valve body (1).

## Description

The present invention relates to a mechanical selector valve suitable for use in household appliances, which enables the selective delivery of a liquid from a source to a plurality of compartments without the use of electronic systems.

In the current technological and industrial applications, the transfer of a liquid from a single source to a plurality of regions is generally achieved using electronically controlled valves. For example, in the Utility Model Document No. CN208295248U, an electrically operated water valve is disclosed. According to this, the water valve of the said invention is connected to a motor. The valve body has a mounting gap, an inlet channel, and a plurality of outlet channels in communication with the mounting cavity. A movable valve member in the valve body is rotated by the drive force from the motor. The transition between the outlet channels is provided electrically by means of the rotational movement of the valve member.

In such systems, components such as circuit boards, sensors, and electric motors are required to direct the liquid. This increases both the production cost of the system and maintenance and operational costs. Especially in complex multi-flow routing applications, electronic control mechanisms require a complicated electronic structure for the activation and deactivation of each outlet, resulting in high costs. Moreover, electronic valves and control boards require a continuous power supply to operate, and if the electronic systems fail, the entire system becomes inoperative. In addition, electronic components are significantly more sensitive than mechanical components to external factors such as vibration, humidity, and temperature, causing performance degradation over long-term use.

Therefore, it is important to develop valves which enable the transfer of a liquid from a single source to a plurality of regions by using mechanical guiding principles, and thus reduce the dependency on electronic control systems. In the state of the art, mechanical systems used for directing liquid flow generally comprise fixed structures and exhibit limited performance in fulfilling complex functions such as multi-directional routing. Therefore, there is still a need for selector valves which make it possible to direct liquids to a plurality of regions based on physical principles and hence offer economical, durable, and environmentally friendly alternatives.

The aim of the present invention is the realization of the design of a selector valve which operates entirely on mechanical principles and requires no electrical components so as to provide cost savings in the production and maintenance of household appliances which require a selector valve. By operating completely mechanically, the selector valve of the present invention also offers high precision and performance over long-term use.

The mechanical selector valve of the present invention comprises a valve body; at least one liquid inlet channel which is arranged at an inlet end of the valve body and which is configured to be associated with at least one conventional valve and/or at least one liquid connection line; a plurality of liquid outlet channels which are arranged at an outlet end of the valve body; a guiding shaft which is seated in a shaft housing provided in the valve body; a plurality of guiding housings which extend between a first end and a second end of the guiding shaft, on a shaft outer wall of the guiding shaft facing the valve body; a movable ring washer which is configured to move between a first position and a second position, in the direction of a pressure direction from the first end to the second end so as to be centered on the guiding shaft, depending on the liquid pressure value accumulated in the valve body; a liquid outlet hole which is provided on the movable ring washer; and at least one guiding rib which is configured on a washer inner wall of the movable ring washer facing the guiding shaft so as to be associated with at least one of the guiding housings and move by sliding over the respective guiding housing when the movable ring washer is in the second position to align the liquid outlet hole with one of the liquid outlet channels and hence to enable the liquid in the valve body to exit through the liquid outlet channel. Since the components in this configuration are mechanically connected to each other, no additional electrical structure or electronic drive mechanism is required. In addition, when used in a household appliance, the delivery of water from a single source to different compartments is provided via a single valve body. The guiding housings provided on the guiding shaft allow the movable ring washer to move in both directions along the pressure direction in a controlled manner via at least one guiding rib provided on the movable ring washer. Here, what is meant by the term "controlled" is that the movement of the guiding rib is limited by the way the guiding housings extend along the shaft outer wall. In other words, the pattern of the guiding housings determines the movement pattern of the guiding rib. Each guiding housing may include multiple divisions, turns, inclines, curves, or bends. In a preferred embodiment of the present invention, the movable ring washer is provided with a plurality of guiding ribs, each configured to be associated with a respective guiding housing. Thus, during the movement of the movable ring washer between the first position and the second position, a guiding rib follows a path provided in a guiding housing and, when the movement is from the second position back toward the first position, may diverge onto another path provided in the same or a different guiding housing. The said first and second positions refer to the positions where the movable ring washer is located, respectively, at the first end and the second end. In the preferred embodiment of the present invention, the said guiding housings are formed on the shaft outer wall as grooves in a radius shape. Accordingly, the guiding ribs are protrusions formed on the washer inner wall so as to fill the radius shape in a plane perpendicular to the pressure direction. This configuration of the present invention allows the water filling the inside of the valve body to exit only through the liquid outlet hole and from there to be discharged through the liquid outlet channel with which the liquid outlet hole is aligned. The liquid pressure value in the said valve body determines whether or not the movable ring washer moves in the pressure direction. Here, factors affecting the liquid pressure value include the flow rate of the liquid, the amount of liquid in the valve body, and the type of liquid. In an embodiment of the present invention, the movable ring washer is configured to move along the guiding shaft in the pressure direction at pressure values of 0.1 bar and above. The factors determining the said maximum pressure value may include the weight of the movable ring washer itself, gravitational acceleration, and a mechanical mechanism provided in the valve body which applies pressure, tension, or thrust in the pressure direction or the opposite direction on the movable ring washer.

In an embodiment of the present invention, the mechanical selector valve further comprises a backward drive mechanism which is arranged on the valve body and which enables the movable ring washer to move in the direction opposite to the pressure direction, either from the second position to the first position or toward a third position located at the first end, in case the liquid pressure in the valve body is reduced to a certain value or is eliminated.

Thus, it is ensured that the movable ring washer, which has moved toward the second end by liquid pressure, is mechanically returned to the first position. The said third position is a position reached by the movable ring washer as a result of rotational movements performed in planes perpendicular to the pressure direction, in addition to movement in the pressure direction, due to divisions and/or arched, curved, inclined, and/or bending parts in the guiding housings.

In an embodiment of the present invention, the drive mechanism comprises a compression spring which is connected at one end to the movable ring washer and at the other end to the valve body. According to this configuration, the compression spring exerts a mechanical secondary force on the movable ring washer and applies a pushing force on the movable ring washer in the direction opposite to the liquid pressure. Consequently, when the liquid pressure value on the movable ring washer drops below a certain threshold, the movable ring washer can return to its former position or to another position located at the first end. In the preferred embodiment of the present invention, when the liquid pressure value drops below a certain level, the movable ring washer moves toward the third position in the direction opposite to the pressure direction. The force applied by the compression spring is calculated according to Hooke's Law as F_{yay}=k·x. ere, F_{yay} represents the force applied by the spring (N); k is the spring constant (N/m); and x is the compression amount of the spring (m). Therefore, the movement of the movable ring washer in the pushing direction depends on the balance between the force applied by the liquid pressure and the spring force. The force applied by the liquid pressure is expressed with the equation Fₛ 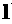 ᵥ 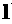 =P·A. Here, P is the liquid pressure (Pa), and A corresponds to the surface area (m²) affected by the movable ring washer. In an embodiment of the present invention, the spring constant (k) may be 1000 N/m and the compression amount may be 0.01 m. Accordingly, the force applied by the spring will be 10 N. In this embodiment, if the surface area (A) of the movable ring washer is 0.001 m², the movement of the movable ring washer toward the second end will begin when the liquid pressure exceeds 10 bar. On the other hand, the movement toward the first end will occur when the liquid pressure falls below 10 bar.

In an embodiment of the present invention, the compression spring is configured to radially surround the guiding shaft. Thus, the pushing force of the compression spring on the movable ring washer is enabled to be distributed homogeneously over the surface of the movable ring washer.

In an embodiment of the present invention, the mechanical selector valve further comprises a linear ring washer which is provided at the end of the compression spring facing the movable ring washer and which is configured to enable the compression spring to be compressed by moving linearly over the guiding shaft by means of the pressure coming from the movable ring washer. This configuration provides a contact surface for the compression spring, strengthens the functional relationship between the compression spring and the movable ring washer, and stabilizes the movement of the compression spring.

In an embodiment of the present invention, the drive mechanism comprises a magnet pair having a first pole arranged at the inlet end and a second pole arranged at the outlet end. In this embodiment of the present invention, the magnetic attraction between the magnet pair creates a mechanical secondary effect on the movable ring washer. In an embodiment of the present invention, the first pole and the second pole may be electromagnets, and the movement of the movable ring washer may be provided by sequentially activating the electromagnets and pulling the movable ring washer in turn. In another embodiment of the present invention, instead of a magnet pair, a single magnet is arranged at the inlet end. In this embodiment, the movable ring washer is ferromagnetic, and when the liquid pressure disappears, the magnet provided at the inlet end pulls the movable ring washer upward.

Consequently, when the liquid pressure value on the movable ring washer drops below a certain threshold, the movable ring washer can return to its former position or to another position located at the first end. In the preferred embodiment of the present invention, when the liquid pressure value drops below a certain level, the movable ring washer moves toward the third position in the direction opposite to the pressure direction. The force produced between the magnet pair can be modeled as Fₘ 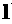 ₖₙₐₜ 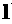 ₛ= µ₀·m₁·m₂ / 4π.d². Here, µ₀ is the magnetic permeability constant (4πx10⁻⁷ N/A²); m₁ and m₂ are the magnetic moments of the poles (A·m); and d is the distance between the magnets (m). The force applied by the liquid pressure is expressed with the equation Fₛ 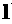 ᵥ 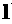 =P·A. Here, P is the liquid pressure (Pa), and A corresponds to the surface area (m²) affected by the movable ring washer.

Accordingly, when the force applied by the liquid pressure falls below the force applied by the magnet pair, the movable ring washer starts to move toward the first end.

In an embodiment of the present invention, each guiding housing comprises a forward guiding housing which is followed by the guiding rib during the movement of the movable ring washer in the pressure direction, and a backward guiding housing which is followed by the guiding rib during the movement of the movable ring washer in the direction opposite to the pressure direction. Accordingly, during the (forward) movement of the movable ring washer from the first end to the second end and the (backward) movement from the second end to the first end, the guiding rib follows different paths. Thus, after shifting from the first position to the second position, the movable ring washer can complete its backward movement toward the first end in a third position. Afterwards, the movable ring washer can complete its forward movement from the third position to the second end in a fourth position. These positions can be increased in proportion to or in the number of liquid outlet channels provided on the valve body. In an embodiment of the present invention, the guiding ribs may be formed in a zigzag manner on the guiding shaft, so that each time the movable ring washer reaches the second end, the liquid outlet hole is aligned with a different liquid outlet channel so as to enable the liquid filling the valve body to exit through a different liquid outlet channel each time.

In an embodiment of the present invention, each forward guiding housing comprises a forward starting part which extends linearly in parallel with the pressure direction on the shaft outer wall and into which the guiding rib enters while moving in the pressure direction, and a forward ending part at which the movement in the pressure direction ends. The forward starting part which is configured linearly in parallel with the pressure direction is in the form of a groove with a radius shape which allows the guiding rib to advance directly in the direction of the liquid pressure on the guiding shaft without any rotation. The forward ending part is in the form of a groove with a radius shape which enables the guiding rib to remain in contact with the shaft outer wall when the movable ring washer reaches the second end.

In an embodiment of the present invention, each backward guiding housing comprises a backward starting part which extends linearly in parallel with the pressure direction on the shaft outer wall and into which the guiding rib enters while moving in the direction opposite to the pressure direction, and a backward ending part at which the movement in this direction ends. The backward starting part which is configured linearly in parallel with the pressure direction is in the form of a groove with a radius shape which allows the guiding rib to advance directly in the direction opposite to the liquid pressure on the guiding shaft without any rotation. The backward ending part is in the form of a groove with a radius shape which enables the guiding rib to remain in contact with the shaft outer wall when the movable ring washer reaches the first end.

In an embodiment of the present invention, the guiding housings are configured such that the forward ending part of each forward guiding housing intersects with the backward starting part of the following backward guiding housing, enabling the guiding rib, which reaches the forward ending part, to move toward the backward starting part and advance toward the first end via the related backward guiding housing when the liquid pressure is reduced to a certain value or eliminated. By means of this configuration, when the movable ring washer completes its movement in the pressure direction and reaches the second end, the guiding rib also completes its movement in this direction at the forward ending part. When the movable ring washer begins to move in the direction opposite to the pressure direction, the guiding rib will move toward the backward starting part intersecting the forward ending part, in other words, encompassing the forward ending part. Since the backward starting part forms a groove structure parallel to the pressure direction on the shaft outer wall, the guiding rib will, according to the principle of least action, prefer the path with the least possible resistance/friction. Accordingly, when the movable ring washer, which is located at the first end in the first position, reaches the second end, the movable ring washer will be in the second position, and here, by passing from the forward ending part to the backward starting part, will be in a third position upon reaching the first end.

In an embodiment of the present invention, the guiding housings are configured such that the backward ending part of each backward guiding housing intersects with the forward starting part of the following forward guiding housing, enabling the guiding rib, which reaches the backward ending part, to move toward the forward starting part and advance toward the second end via the related forward guiding housing when the liquid pressure exceeds a certain value. By means of this configuration, when the movable ring washer completes its movement in the direction opposite to the pressure direction and reaches the second end, the guiding rib also completes its movement in this direction at the forward ending part. When the movable ring washer once again begins to move in the pressure direction, the guiding rib will move toward the forward starting part intersecting the backward ending part, in other words, encompassing the backward ending part. Since the forward starting part forms a groove structure parallel to the pressure direction on the shaft outer wall, the guiding rib will, according to the principle of least action, prefer the path with the least possible resistance/friction. Accordingly, when the movable ring washer, which is located at the second end in the second position, reaches the first end, the movable ring washer will be in the third position, and here, by passing from the backward ending part to the forward starting part, will be in a fourth position upon reaching the first end.

In an embodiment of the present invention, each forward guiding housing comprises at least one curved part which is arranged so as to provide continuity between the forward starting part and the forward ending part and to allow the movable ring washer to rotate in planes perpendicular to the pressure direction while moving in the pressure direction. By means of this configuration, the guiding rib following the pattern formed by the forward guiding housing enables the movable ring washer to move both in the pressure direction and rotationally while passing through the curved part. Thus, when the movable ring washer reaches the second end, the position of the liquid outlet hole can also be changed radially. This enables the liquid in the valve body to be discharged through the desired liquid outlet channel.

In an embodiment of the present invention, each backward guiding housing comprises at least one bent part which is arranged so as to provide continuity between the backward starting part and the backward ending part and to allow the movable ring washer to rotate in planes perpendicular to the pressure direction while moving in the direction opposite to the pressure direction. By means of this configuration, the guiding rib following the pattern formed by the backward guiding housing enables the movable ring washer to move both in the direction opposite to the pressure direction and rotationally while passing through the bent part. Thus, upon reaching the first end, the movable ring washer can be fixed in a position different from the previous position thereof at the first end. This enables the liquid in the valve body to be discharged through the desired liquid outlet channel in the next water intake.

The present invention also discloses a washing appliance comprising a mechanical selector valve as described in any one of the above embodiments. The washing appliance of the present invention further comprises a conventional valve to which the mechanical selector valve is associated and a liquid connection line which supplies the water to the said conventional valve. In an embodiment of the present invention, the said liquid connection line may be a mains water line. In an embodiment of the present invention, the washing appliance further comprises a detergent compartment and a softener compartment. Accordingly, each of the detergent compartment and the softener compartment is separately associated with a liquid outlet channel provided in the mechanical selector valve of the present invention. Thus, the intake of detergent and the intake of softener performed at different times during a washing cycle are mechanically performed by means of a single valve body. The said washing appliance may be a washing machine.

The present invention also discloses a water guiding method wherein a mechanical selector valve as described in any one of the above embodiments is used. The method of the present invention comprises the following process steps:
i. associating the liquid inlet channel with a conventional valve in the washing appliance;
ii. associating each liquid outlet channel with different sections in the appliance requiring the use of water;
iii. positioning the mechanical selector valve in a first stage;
iv. performing the intake of water from the conventional valve into the mechanical selector valve so as to deliver the water to the section associated with the first liquid outlet channel while the mechanical selector valve is in the first stage;
v. discharging the water in the valve body to position the mechanical selector valve in a second stage;
vi. performing the intake of water from the conventional valve into the mechanical selector valve so as to deliver the water to the section associated with the second liquid outlet channel while the mechanical selector valve is in the second stage; and
vii. repeating the intake of water into the valve body and the discharge of water from the valve body depending on the liquid outlet channel the user wishes to activate.

The mechanical selector valve realized in order to attain the aims of the present invention is illustrated in the attached figures, where:
Figure 1 - is the perspective view of the mechanical selector valve in an embodiment of the present invention.
Figure 2 - is the front cross-sectional view of the mechanical selector valve in an embodiment of the present invention.
Figure 3 - is the front cross-sectional view of the mechanical selector valve in another embodiment of the present invention.
Figure 4 - is the perspective view of the guiding shaft in the mechanical selector valve in an embodiment of the present invention.
Figure 5 - is the top view of the guiding shaft in the mechanical selector valve in an embodiment of the present invention shown in Figure 4.
Figure 6 - is the top view of the movable ring washer in the mechanical selector valve in an embodiment of the present invention.
Figure 7 - is the perspective view of the movable ring washer in the mechanical selector valve in an embodiment of the present invention shown in Figure 6.
Figure 8 - is the perspective view of the movable ring washer in the first position on the guiding shaft in an embodiment of the present invention shown in Figure 2.
Figure 9 - is the perspective view of the movable ring washer while moving toward the second position on the guiding shaft in an embodiment of the present invention shown in Figure 2.
Figure 10 - is the perspective view of the movable ring washer in the second position on the guiding shaft in an embodiment of the present invention shown in Figure 2.
Figure 11 - is the perspective view of the mechanical selector valve associated with a conventional valve and a liquid connection line in an embodiment of the present invention.
Figure 12 - is the perspective view of a washing appliance wherein the mechanical selector valve is used in an embodiment of the present invention.

The elements illustrated in the figures are numbered as follows:
- 100.: Washing appliance
- 20.: Conventional valve
- 30.: Liquid connection line
- 40.: Liquid transfer line
- 50.: Detergent compartment
- 60.: Softener compartment
- 10.: Mechanical selector valve
- 1.: Valve body
11. Inlet end
111. Liquid inlet channel
12. Outlet end
121. Liquid outlet channel
13. Shaft housing
14. Valve lid
15. Stopping member
- 2.: Guiding shaft
21. First end
22. Second end
23. Shaft outer wall
24. Guiding housing
241. Forward guiding housing
241a. Forward starting part
241b. Forward ending part
241c. Curved part
242. Backward guiding housing
242a. Backward starting part
242b. Backward ending part
242c. Bent part
- 3.: Movable ring washer
31. Liquid outlet hole
32. Washer inner wall
33. Guiding rib
- 4.: Backward drive mechanism
41. Compression spring
42. Magnet pair
421. First pole
422. Second pole
- 5.: Linear ring washer
- X.: Pressure direction

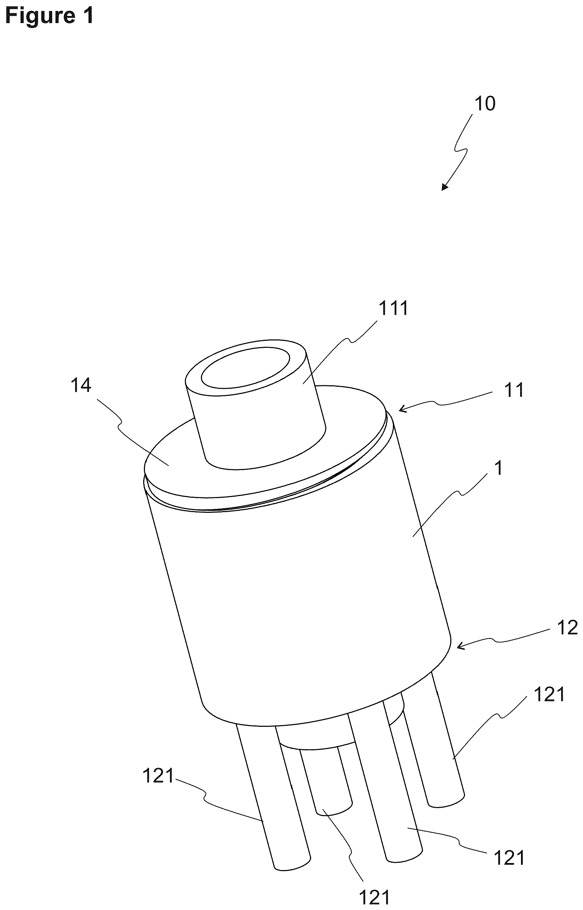

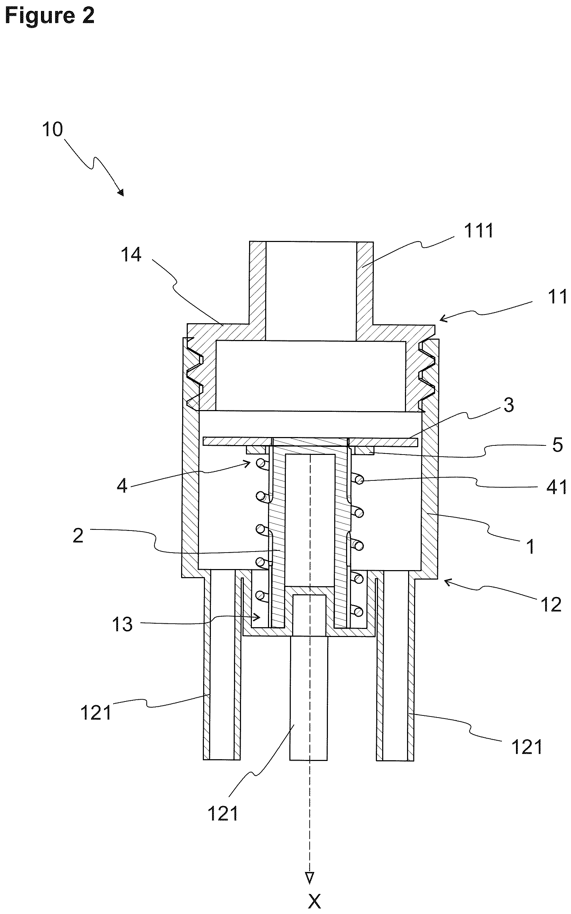

The mechanical selector valve (10) presented within the scope of the present invention, as shown in Figure 1, comprises a valve body (1) and a liquid inlet channel (111) which is provided at an inlet end (11) of the valve body (1) so as to allow the liquid to enter the valve body (1). In the embodiments shown in Figures 1 and 2, the liquid inlet channel (111) is provided on a valve lid (14) covering the inlet end (11) of the valve body (1). At an outlet end (12) corresponding to the inlet end (11) of the valve body (1), a plurality of liquid outlet channels (112) configured to allow the discharge of liquid are provided. With reference to the embodiment shown in Figure 1, the mechanical selector valve (10) comprises four liquid outlet channels (112).

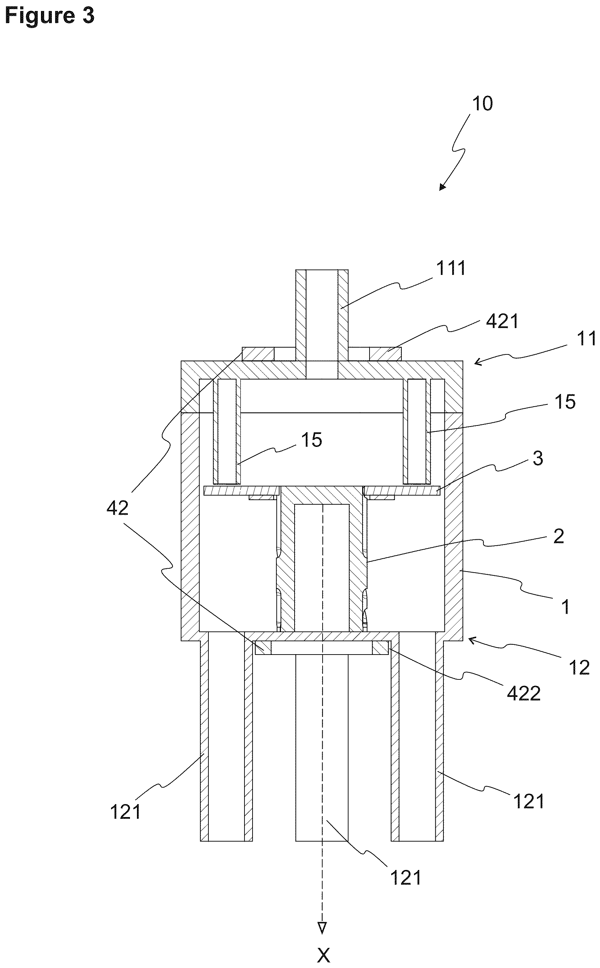

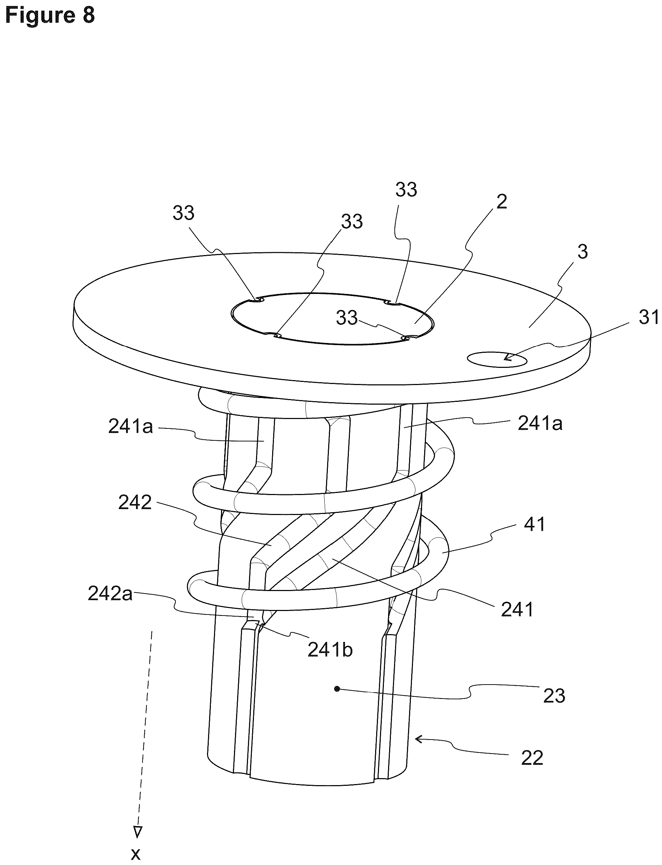

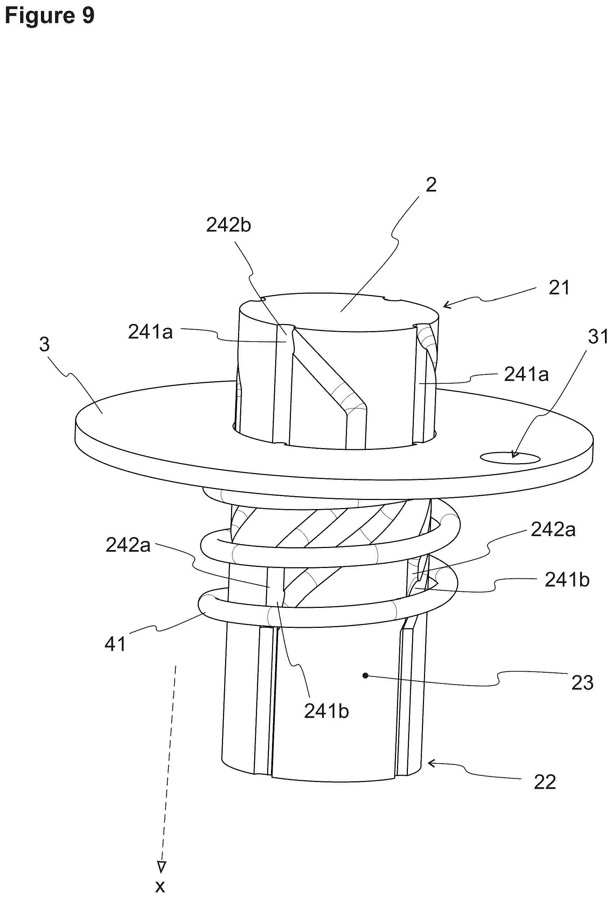

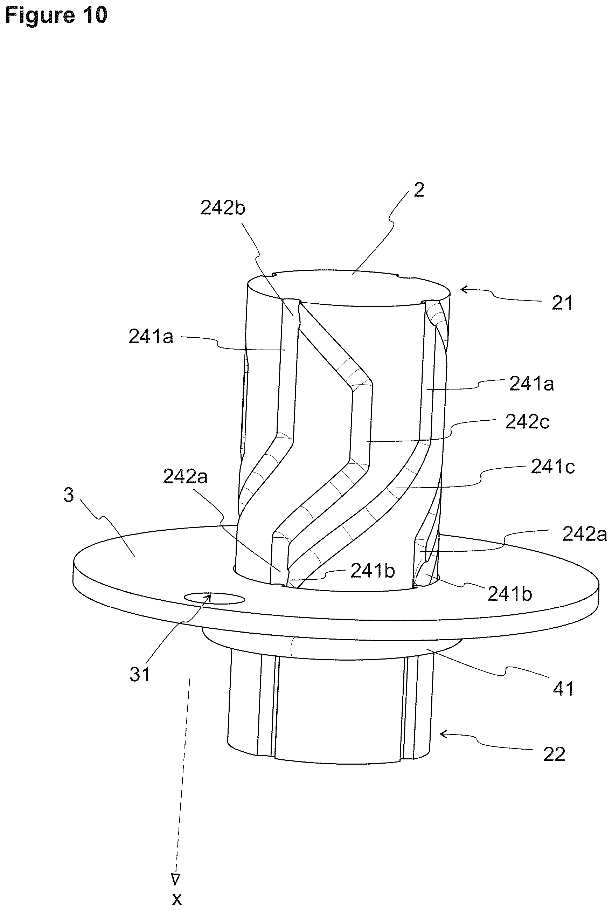

As shown in Figures 2 and 3, a guiding shaft (2) with a cylindrical structure is provided in the valve body (1). The guiding shaft (2) may be seated in a shaft housing (13), as in the embodiment in Figure 2, so as to be fixed therein. The valve body (1) is further configured to surround a radial thickness of the guiding shaft (2) and is provided with a movable ring washer (3) which can move linearly and rotationally on the guiding shaft (2) and concentrically with the guiding shaft (2). When taken into the valve body (1), the liquid comes into contact with the movable ring washer (3) and applies pressure onto the movable ring washer (3). Accordingly, as can be understood from Figures 2, 3, and 8 to 10, the linear movement of the movable ring washer (3) takes place in the direction of the pressure direction (X) applied by the liquid. Thus, the movable ring washer (3) may remain fixed in a first position so as to be located at a first end (21) of the guiding shaft (2), as in Figure 8, when there is no liquid in the valve body (1) or when the pressure applied by the existing liquid is below a certain limit value. When the pressure applied by the liquid in the valve body (1) on the movable ring washer (3) exceeds the limit value, the movable ring washer (3) moves in the pressure direction (X), as in Figure 9. The movable ring washer (3) completes its movement in the pressure direction (X) at a second position upon arriving at or approaching a second end (22) of the guiding shaft (2), as shown in Figure 10.

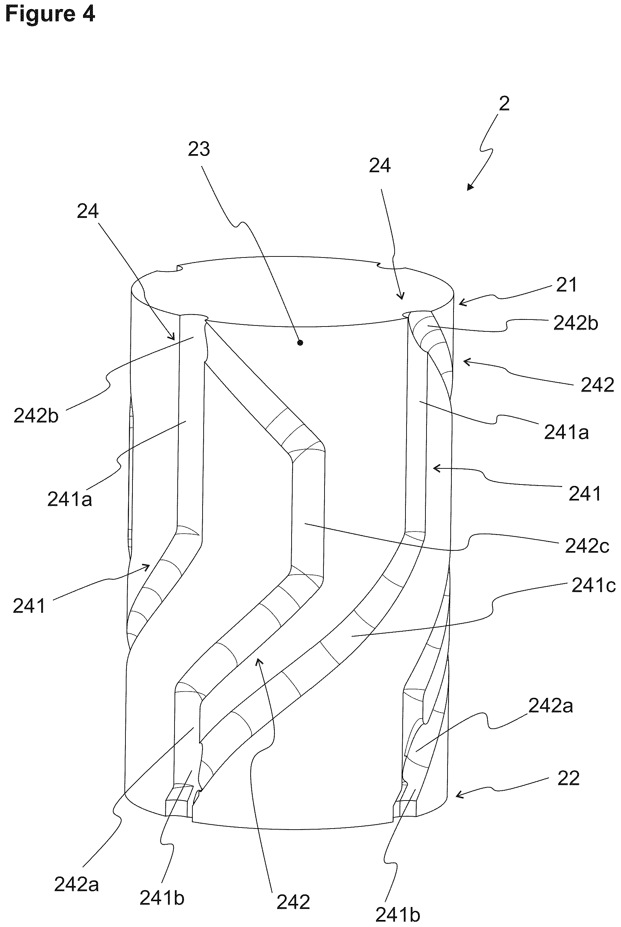

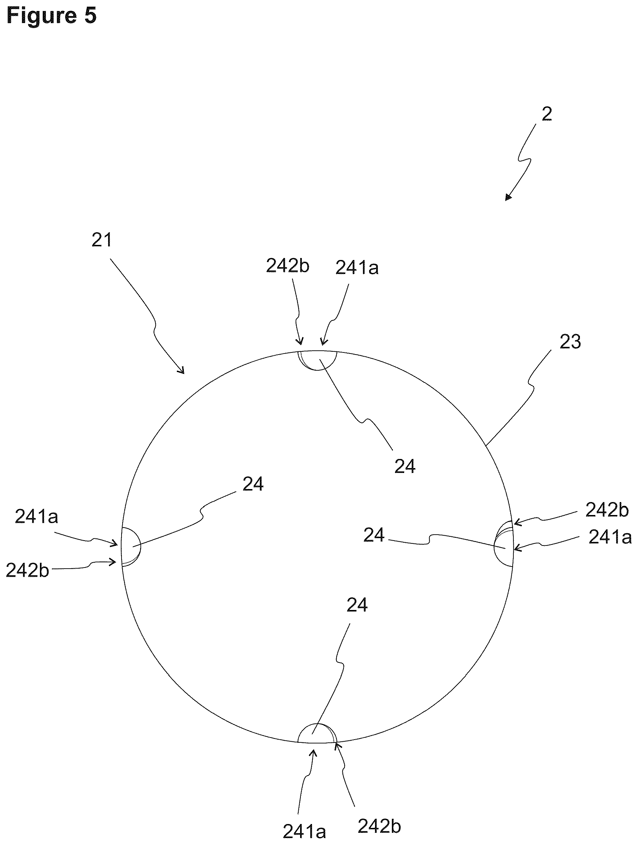

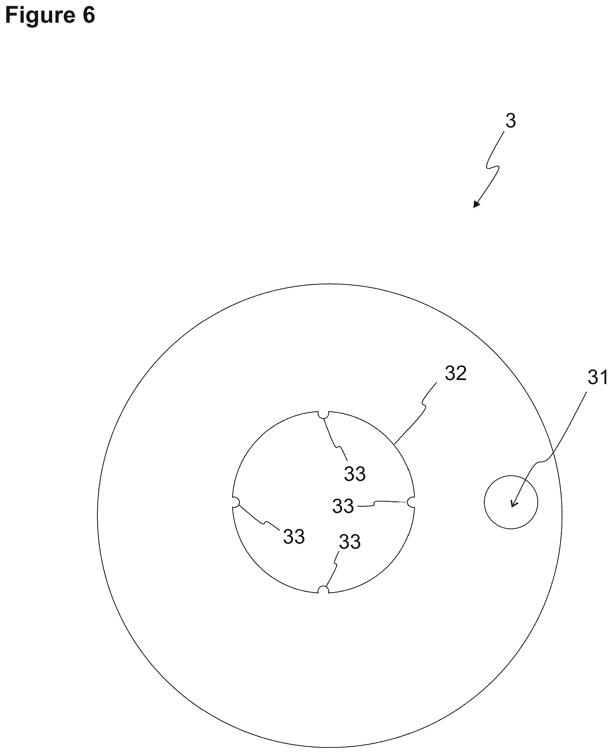

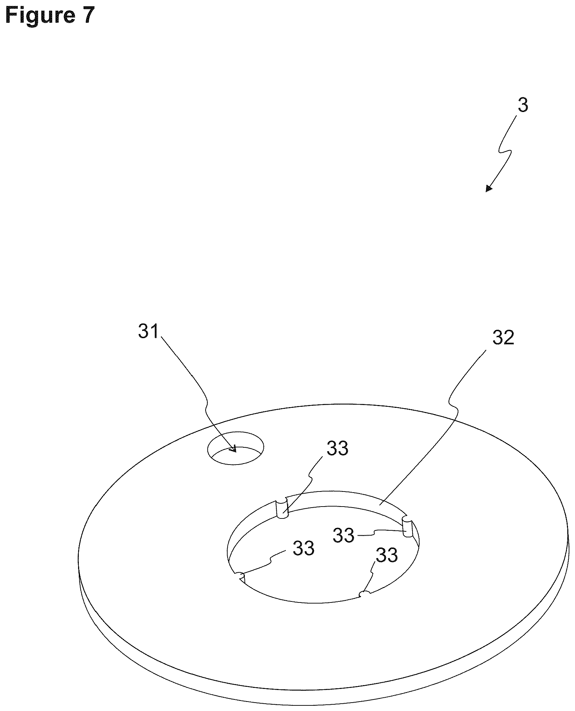

With reference to Figures 6 and 7, the movable ring washer (3) comprises a liquid outlet hole (31) on the surface thereof in contact with the liquid. Accordingly, when the movable ring washer (3) arrives at the second position as a result of the linear and rotational movement, the liquid outlet hole (31) is aligned with one of the liquid outlet channels (121). Thus, the liquid in the valve body (1) passes through the liquid outlet hole (31) to be discharged through the aligned liquid outlet channel (121). The movable ring washer (3) further comprises guiding ribs (33) on the washer inner wall (32) facing the guiding shaft (2) so as to determine the limits of the rotational movement. With reference to Figure 4, the guiding ribs (33) are associated with guiding housings (24) provided on a shaft outer wall (23) of the guiding shaft (2) so as to determine the pattern of the rotational movement of the movable ring washer (3) during the linear movement. As can be understood from Figures 4 and 5, the guiding housings (24) extend between the first end (21) and the second end (22) so as to allow the movement of the movable ring washer (3) between the first position and the second position. In the embodiment shown in Figures 4 and 5, each guiding housing (24) comprises two grooves intersecting at the first end (21), namely a forward guiding housing (241) and a backward guiding housing (242). Moreover, the backward guiding housing (242) provided in a guiding housing (24) intersects at the second end (22) with the forward guiding housing (241) provided in the following guiding housing (24) on the shaft outer wall (23).

With reference to the embodiment in Figure 4, the forward guiding housing (241) comprises a forward starting part (241a) at the first end (21). The forward starting part (241a) is configured to cover the point where the forward guiding housing (241) and the backward guiding housing (242) intersect at the first end (21) and to extend linearly in parallel with the pressure direction (X) of the liquid starting from the said point on the shaft outer wall (23). Thus, when in the first position, the guiding rib (33) begins moving in the pressure direction (X) with the forward starting part (241a), along which the guiding rib (33) can move linearly. The forward starting part (241a) is followed by a curved part (241c) which is configured to allow the movable ring washer (3) to perform a rotational movement. The curved part (241c) may be in the form of a linear groove configured to form an angle with the forward starting part (241a). The curved part (241c) on the forward guiding housing (241) is followed by a forward ending part (241b), at which the guiding rib (33) stops upon reaching the second end (22). By means of this configuration, when the guiding rib (33) completes its journey from the first end (21) to the second end (22), the position of the liquid outlet hole (31) on the movable ring washer (3) changes in the radial direction.

The forward ending part (241b) intersects with a backward starting part (242a) of a backward guiding housing (242) provided in another guiding housing (24). Accordingly, the backward starting part (242a) is a groove structure extending linearly in parallel with the pressure direction (X) so as to encompass the forward ending part (241b). Thus, when in the second position, the guiding rib (33) begins moving in the direction opposite to the pressure direction (X) with the backward starting part (242a), along which the guiding rib (33) can move linearly. The backward starting part (242a) is followed by a bent part (242c) which is configured to allow the movable ring washer (3) to perform a rotational movement. The bent part (242c) may comprise a plurality of linear grooves structured to form angles with the backward starting part (242a) and with each other. The bent part (242c) on the backward guiding housing (242) is followed by a backward ending part (242b), at which the guiding rib (33) stops upon reaching the first end (21). By means of this configuration, upon completing its journey from the second end (22) to the first end (21), the guiding rib (33) reaches a third position different from the first position. Accordingly, the movable ring washer (3) can make a full cycle by zigzagging between the first end (21) and the second end (22) along the interconnected guiding housings (24) and return to the initial position, in other words, the first position. In this embodiment, the number of guiding housings (24), the number of liquid outlet channels (121), and the number of guiding ribs (33) are equal.

In a preferred embodiment of the present invention, the movement of the movable ring washer (3) in the direction opposite to the pressure direction (X) is provided by a backward drive mechanism (4). With reference to Figures 2 and 8 to 10, the backward drive mechanism (4) comprises a compression spring (41) which is configured to push the movable ring washer (3) in the direction opposite to the pressure direction (X). In this sense, the compression spring (41) generates a counterforce against the liquid pressure in the valve body (1). Accordingly, when the liquid pressure in the valve body (1) falls below the limit value, the compression spring (41) overcomes the liquid pressure and pushes the movable ring washer (3) toward the first end (21). In the preferred embodiment of the present invention, the compression spring (41) is configured to radially surround the guiding shaft (2) and to perform a compression-extension motion concentrically with the guiding shaft (2). As shown in Figure 2, a linear ring washer (5) is provided at the end of the compression spring (41) facing the movable ring washer (3). The linear ring washer (5) is positioned concentrically with the guiding shaft (2) and the movable ring washer (3) so as to create a contact surface for the compression spring (41) to engage with the movable ring washer (3) and hence to transmit the motion of the compression spring (41) uniformly to the movable ring washer (3). Accordingly, the linear ring washer (5) performs a linear movement on the guiding shaft (2) by the force received from the compression spring (41).

In an embodiment shown in Figure 3, the backward drive mechanism (4) comprises a magnet pair (42) having a first pole (421) arranged at the inlet end (11) and a second pole (422) arranged at the outlet end (12). In this embodiment, the movable ring washer (3) also has magnetic properties. Accordingly, when the liquid pressure in the valve body (1) falls below the limit value, the magnetic interaction between the movable ring washer (3) and the magnet pair (42) forces the movable ring washer (3) to move toward the first end (21). In this embodiment of the present invention, a stopping member (15) is provided in the valve body (1) to prevent the movable ring washer (3) from moving further due to magnetic force and detaching from the guiding shaft (2) upon reaching the first end (21). As shown in Figure 3, the stopping member (15) may be cylindrical in form.

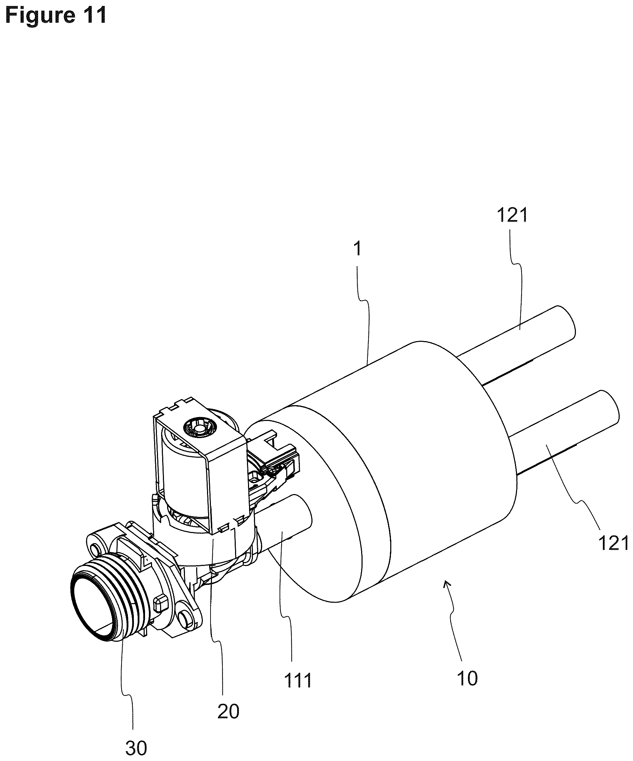

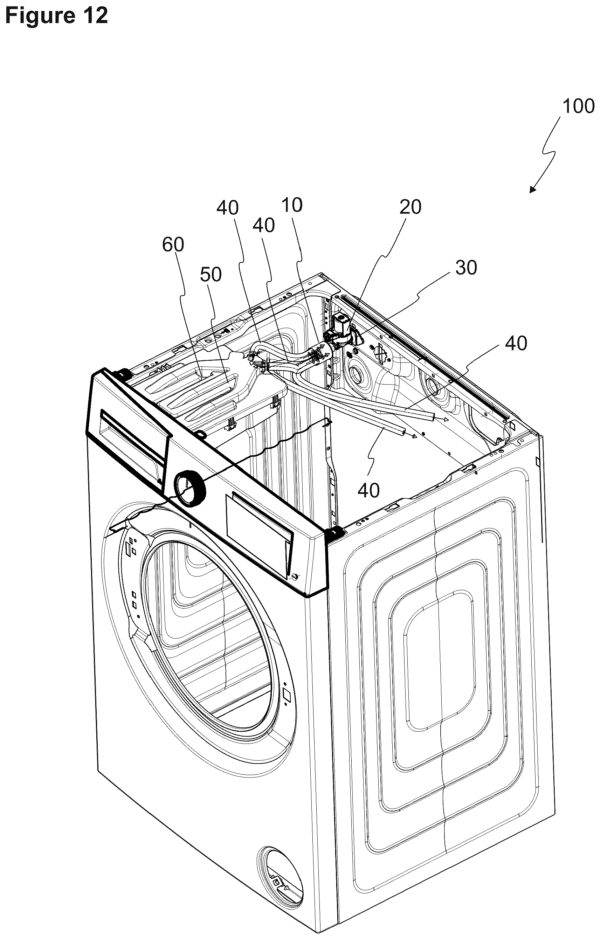

The present invention also discloses a washing appliance (100) comprising a mechanical selector valve (10) as described in any one of the above embodiments. With reference to Figures 11 and 12, the washing appliance (100) comprises a conventional valve (20) which is associated with the liquid inlet channel (111) to supply water to the mechanical selector valve (10) during operation. The water is supplied to the conventional valve (20) through a liquid connection line (30). The said liquid connection line (30) may be a mains water line, as shown in Figure 12. In the embodiment shown in Figure 12, the washing appliance (100) also comprises a detergent compartment (50) and a softener compartment (60). Accordingly, each of the detergent compartment (50) and the softener compartment (60) is separately associated with a liquid outlet channel (121) provided in the mechanical selector valve (10) of the present invention. Thus, the intake of detergent and the intake of softener performed during a washing cycle are mechanically performed by means of a single valve body (1).

The present invention also discloses a water guiding method wherein a mechanical selector valve (10) as described in any one of the above embodiments is used in a washing appliance (100) Accordingly, the user only needs to issue a command to the washing appliance (100) to operate the conventional valve (20). Here, the conventional valve (20) may be associated with an electronic unit which allows user control. Thus, by opening and closing the conventional valve (20), the user creates a pressure variation in the valve body (1) of the mechanical selector valve (10). The number of open-close operations performed by the user on the conventional valve (20) determines which liquid outlet channel (121) of the mechanical selector valve (10) becomes aligned with the liquid outlet hole (31). In other words, each time the conventional valve (20) is opened, the water flows from the conventional valve (20) into the mechanical selector valve (10) so as to cause a stage change in the liquid outlet channel (121) of the mechanical selector valve (10). Accordingly, the water guiding method of the present invention comprises the following steps in an optional embodiment:
i. associating the liquid inlet channel (111) with a conventional valve (20) in the washing appliance (100);
ii. associating each liquid outlet channel (121) with different sections in the appliance requiring the use of water;
iii. positioning the mechanical selector valve (10) in a first stage;
iv. performing the intake of water from the conventional valve (20) into the mechanical selector valve (10) so as to deliver the water to the section associated with the first liquid outlet channel (121) while the mechanical selector valve (10) is in the first stage;
v. discharging the water in the valve body (1) to position the mechanical selector valve (10) in a second stage;
vi. performing the intake of water from the conventional valve (20) into the mechanical selector valve (10) so as to deliver the water to the section associated with the second liquid outlet channel (121) while the mechanical selector valve (10) is in the second stage; and
vii. repeating the intake of water into the valve body (1) and the discharge of water from the valve body (1) depending on the liquid outlet channel (121) the user wishes to activate.

## Claims

1. A mechanical selector valve (1) comprising a valve body (1); at least one liquid inlet channel (111) which is arranged at an inlet end (11) of the valve body (1) and which is configured to be associated with at least one conventional valve (20) and/or at least one liquid connection line (30); and a plurality of liquid outlet channels (121) which are arranged at an outlet end (12) of the valve body (1), **characterized by**
a guiding shaft (2) which is provided in the valve body (1);
a plurality of guiding housings (24) which extend between a first end (21) and a second end (22) of the guiding shaft (2), on a shaft outer wall (23) of the guiding shaft (2) facing the valve body (1);
a movable ring washer (3) which is configured to move between a first position and a second position, in the direction of a pressure direction (X) from the first end (21) to the second end (22) so as to be centered on the guiding shaft (2), depending on the liquid pressure value accumulated in the valve body (1);
a liquid outlet hole (31) which is provided on the movable ring washer (3); and
at least one guiding rib (33) which is configured on a washer inner wall (32) of the movable ring washer (3) facing the guiding shaft (2) so as to be associated with at least one of the guiding housings (24) and move by sliding over the said guiding housing (24) when the movable ring washer (3) is in the second position to align the liquid outlet hole (31) with one of the liquid outlet channels (121) and hence to enable the liquid in the valve body () to exit through the liquid outlet channel (121).

2. A mechanical selector valve (10) as in Claim 1, a backward drive mechanism (4) which is arranged on the valve body (1) and which enables the movable ring washer (3) to move in the direction opposite to the pressure direction (X), either from the second position to the first position or toward a third position located at the first end (21), in case the liquid pressure in the valve body (1) is reduced to a certain value or is eliminated.

3. A mechanical selector valve (10) as in Claim 2, **characterized by** a backward drive mechanism (4) having a compression spring (41) associated at one end with the movable ring washer (3) and at the other end with the valve body (1).

4. A mechanical selector valve (10) as in Claim 3, **characterized by** the compression spring (41) which is configured to radially surround the guiding shaft (2).

5. A mechanical selector valve (10) as in Claim 4, **characterized by** a linear ring washer (5) which is provided at the end of the compression spring (41) facing the movable ring washer (3) and which is configured to enable the compression spring (41) to be compressed by moving linearly over the guiding shaft (2) by means of the pressure coming from the movable ring washer (3).

6. A mechanical selector valve (10) as in Claim 2, **characterized by** the backward drive mechanism (4) comprising a magnet pair (42) having a first pole (421) arranged at the inlet end (11) and a second pole (422) arranged at the outlet end (12).

7. A mechanical selector valve (10) as in any one of Claims 2 to 6, **characterized by** a plurality of guiding housings (24), each comprising a forward guiding housing (241) which is followed by the guiding rib (33) during the movement of the movable ring washer (3) in the pressure direction (X), and a backward guiding housing (242) which is followed by the guiding rib (33) during the movement of the movable ring washer (3) in the direction opposite to the pressure direction (X).

8. A mechanical selector valve (10) as in Claim 7, **characterized by** a plurality of forward guiding housings (241), each comprising a forward starting part (241a) which extends linearly on the shaft outer wall (23) and into which the guiding rib (33) enters while moving in the pressure direction (X), and a forward ending part (241b) at which the movement in the pressure direction (X) ends.

9. A mechanical selector valve (10) as in Claim 8, **characterized by** a plurality of backward guiding housings (242), each comprising a backward starting part (242a) which extends linearly on the shaft outer wall (23) and into which the guiding rib (33) enters while moving in the direction opposite to the pressure direction (X), and a backward ending part (242b) at which the movement in this direction ends.

10. A mechanical selector valve (10) as in Claim 9, **characterized by** a plurality of guiding housings (24) which are configured such that the forward ending part (241b) of each forward guiding housing (241) intersects with the backward starting part (242a) of the following backward guiding housing (242), enabling the guiding rib (33), which reaches the forward ending part (241b), to move toward the backward starting part (242a) and advance toward the first end (21) via the related backward guiding housing (242) when the liquid pressure is reduced to a certain value or eliminated.

11. A mechanical selector valve (10) as in Claim 10, **characterized by** a plurality of guiding housings (24) which are configured such that the backward ending part (242b) of each backward guiding housing (242) intersects with the forward starting part (241a) of the following forward guiding housing (241), enabling the guiding rib (33), which reaches the backward ending part (242b), to move toward the forward starting part (241a) and advance toward the second end (22) via the related forward guiding housing (241) when the liquid pressure exceeds a certain value.

12. A mechanical selector valve (10) as in any one of Claims 8 to 11, **characterized by** a plurality of forward guiding housings (241), each comprising at least one curved part (241c) which is arranged so as to provide continuity between the forward starting part (241a) and the forward ending part (241b) and to allow the movable ring washer (3) to rotate in planes perpendicular to the pressure direction (X) while moving in the pressure direction (X).

13. A mechanical selector valve (10) as in Claim 9, **characterized by** a plurality of backward guiding housings (242), each comprising at least one bent part (242c) which is arranged so as to provide continuity between the backward starting part (242a) and the backward ending part (242b) and to allow the movable ring washer (3) to rotate in planes perpendicular to the pressure direction (X) while moving in the direction opposite to the pressure direction (X).

14. A washing appliance (100) comprising the mechanical selector valve (10) as in any one of the above claims.

15. A water guiding method wherein a mechanical selector valve (10) as in any one of Claims 1 to 13 is used in a washing appliance (100), comprising the following process steps:
viii. associating the liquid inlet channel (111) with a conventional valve (20) in the washing appliance (100);
ix. associating each liquid outlet channel (121) with different sections in the appliance requiring the use of water;
x. positioning the mechanical selector valve (10) in a first stage;
xi. performing the intake of water from the conventional valve (20) into the mechanical selector valve (10) so as to deliver the water to the section associated with the first liquid outlet channel (121) while the mechanical selector valve (10) is in the first stage;
xii. discharging the water in the valve body (1) to position the mechanical selector valve (10) in a second stage;
xiii. performing the intake of water from the conventional valve (20) into the mechanical selector valve (10) so as to deliver the water to the section associated with the second liquid outlet channel (121) while the mechanical selector valve (10) is in the second stage; and
xiv. repeating the intake of water into the valve body (1) and the discharge of water from the valve body (1) depending on the liquid outlet channel (121) the user wishes to activate.
